# EUROPÄISCHE PATENTSCHRIFT

(11) **EP 2 883 752 B1**
(45) Veröffentlichungstag und Bekanntmachung des Hinweises auf die Patenterteilung: **14.03.2018**
(21) Anmeldenummer: 14004125.2
(22) Anmeldetag: 06.12.2014
(51) Int. Cl.: B60R 11/04, G01S 7/40, G01S 13/93, G01S 7/02

(54) **Kraftfahrzeug mit zu justierendem und/oder zu kalibrierenden Sensor, Sensor und Verfahren zur Überwachung eines Sensors**
Vehicle with an adjustable and/or calibratable sensor, the sensor and the method for monitoring the sensor
Véhicule avec un capteur à ajuster et/ou calibrer, capteur et procédé de surveillance d'un capteur

(30) Priorität: 14.12.2013 DE 102013021459
(43) Veröffentlichungstag der Anmeldung: 17.06.2015
(73) Patentinhaber: AUDI AG, 85045 Ingolstadt (DE); Automotive Safety Technologies GmbH, 85080 Gaimersheim (DE)
(72) Erfinder: Pollmer, Jens, 85055 Ingolstadt (DE); Müller, Christian, 86676 Ehekirchen (DE)
(74) Vertreter: Thielmann, Frank

(56) Entgegenhaltungen:
- WO-A1-99/15368
- WO-A1-2010/130539
- DE-A1- 19 934 197
- US-A1- 2011 163 904

## Beschreibung

Die Erfindung betrifft ein Kraftfahrzeug, umfassend wenigstens einen zu justierenden und/oder zu kalibrierenden Sensor, der in einer festen Einbauposition innerhalb des Kraftfahrzeugs montiert ist. Daneben betrifft die Erfindung einen zu justierenden und/oder zu kalibrierenden Sensor zur Montage in einer festen Einbauposition innerhalb eines Kraftfahrzeugs und ein Verfahren zur Überwachung wenigstens eines zu justierenden und/oder zu kalibrierenden Sensors, der in einer festen Einbauposition innerhalb eines Kraftfahrzeugs montiert ist.

Heutige Kraftfahrzeuge weisen eine Vielzahl von Sensoren, insbesondere Umfeldsensoren, auf, die an verschiedenen Stellen innerhalb des Kraftfahrzeugs montiert sind. Insbesondere bei Umfeldsensoren ist es zur verlässlichen Realisierung der deren Sensordaten nutzenden Funktionen verschiedener Fahrzeugsysteme notwendig, diese möglichst exakt zu justieren und/oder zu kalibrieren, insbesondere, was Kameras und/oder Entfernungssensoren angeht, deren Erfassungsbereich möglichst exakt bekannt sein muss. Bei der Herstellung des Kraftfahrzeugs bzw. bei Einbau eines derartigen Sensors ist es daher üblich, zunächst eine Justierung und/oder Kalibrierung vorzunehmen, bevor der Sensor in Betrieb genommen wird.

Beispiele für derartige zu justierende und/oder zu kalibrierende Sensoren sind im Bereich einer Frontscheibe des Kraftfahrzeugs fest angeordnete Kameras und an der Karosserie des Kraftfahrzeugs befestigte Radarsensoren. Bei an Frontscheiben zu montierenden und zu fixierenden Kameras ist es beispielsweise bekannt, eine Halteeinrichtung zu verwenden, die auf die Frontscheibe aufgeklebt wird, in die dann die Kamera in eine entsprechende Aufnahme eingesetzt werden kann, wo sie bevorzugt, beispielsweise mittels einer Verriegelungseinrichtung, fixiert wird.

Problematisch bei derartigen Sensoren ist es, dass die Justierung bzw. die Kalibrierung verloren gehen kann, wenn die Sensoren aus ihrer Einbauposition entfernt und später wieder in diese eingefügt werden. Dies kann beispielsweise im Rahmen von Werkstattarbeiten geschehen, wobei es beispielsweise bei Kameras an Frontscheiben häufig vorkommt, dass, beispielsweise aufgrund von Steinschlag, die Frontscheibe ausgetauscht werden muss und die Kamera sowie gegebenenfalls die Halteeinrichtung von der alten Scheibe demontiert und an die neue Scheibe angeschlossen werden. In heutigen Kraftfahrzeugen ist es nicht möglich, nachzuvollziehen, ob der Sensor nochmals aus- und wieder eingebaut wurde, so dass ein Fehlverbau des Sensors, eine mangelnde oder falsche Nachkalibrierung und dergleichen selten nachvollzogen werden können.

Zwar ist es grundsätzlich denkbar, die Sensoren mit Siegeln und/oder Verplombungen zu versehen, einen Ausbau nur unter Zerstörung wenigstens eines Teils der Halteeinrichtung zu erlauben und/oder sonstige Sicherungen zu verwenden, beispielsweise Fluidsicherungen, die bei Demontage des Sensors brechen bzw. sich verfärben. Solche Sicherungsmaßnahmen stellen letztlich nur eine Erinnerung an die den Ausbau und den darauffolgenden Wiedereinbau vornehmende Person dar, eine Justierung und/oder Kalibrierung vorzunehmen, ohne dass der Vorgang bei Erneuerung der Sicherungsmaßnahme tatsächlich nachvollziehbar ist. Ob eine Neujustierung und/oder Neukalibrierung erfolgt, bleibt vollständig dem Monteur überlassen. Dokument WO 99/15368 A1 offenbart ein Kraftfahrzeugssicherheitssystem mit Crashsensoren und einem Sicherheitsschalter, der durch einen Pin in einer offenen Position gehalten wird, wenn die Sicherheitssystemelektronik unter einem Sitz positioniert ist. Werden die Crashsensoren zur Wartung entfernt, schließt sich der Schalter automatisch und schließt die Auslösevorrichtungen kurz.

Der Erfindung liegt daher die Aufgabe zugrunde, die Nachvollziehbarkeit eines Aus- und Einbauvorgangs des Sensors zu verbessern.

Zur Lösung dieser Aufgabe ist bei einem Kraftfahrzeug der eingangs genannten Art erfindungsgemäß vorgesehen, dass eine Detektionseinrichtung zum Erfassen einer temporären Entfernung des Sensors aus der Einbauposition und eine bei einer erfassten temporären Entfernung des Sensors aus der Einbauposition wenigstens eine Maßnahme einleitende Steuereinrichtung vorgesehen sind.

Die Erfindung sieht mithin vor, eine Demontage des Sensors im stromlosen Zustand über eine Detektionseinrichtung automatisch zu erkennen, so dass bei jedem Start des Sensors überprüft werden kann, ob dieser ausgebaut und wieder eingebaut wurde, denn die einleitend diskutierte geometrische Justage und/oder Kalibrierung, insbesondere bezüglich des Erfassungsbereich, könnte nicht mehr gültig sein. Das Detektionsergebnis wird von einer Steuereinrichtung, die aus einem oder mehreren Steuergeräten gebildet sein kann, ausgewertet, und es werden geeignete Maßnahmen eingeleitet, wenn festgestellt wurde, dass der Sensor temporär entfernt worden ist. Es sind verschiedene Maßnahmen denkbar, die durch die Steuereinrichtung eingeleitet werden können. So ist es zunächst möglich, einen Ausbaueintrag in einem Ereignisspeicher des Kraftfahrzeugs und/oder auch konkret des Sensors abzulegen. Hierbei wird also zur späteren Überprüfung festgehalten, dass der Aus- und Wiedereinbauvorgang stattgefunden hat, so dass dies, beispielsweise bei einer später festgestellten Fehlkalibrierung, nachvollziehbar ist und die Verantwortlichkeit leichter geklärt werden kann. Dabei ist es selbstverständlich auch denkbar, den Ausbaueintrag sowohl in einem allgemeinen Ereignisspeicher für das Kraftfahrzeug abzuspeichern als auch innerhalb des Sensors selbst.

Eine weitere mögliche Maßnahme sieht vor, dass eine Warninformation über eine Anzeigevorrichtung des Kraftfahrzeugs ausgegeben wird, beispielsweise über ein Mensch-Maschine-Interface bzw. ein sonstiges Display oder über ein Head-Up-Display. Auf diese Weise kann ein Monteur bzw. ein das Kraftfahrzeug später wieder in Betrieb nehmender Fahrer unmittelbar erkennen, dass der Sensor temporär entfernt wurde und somit nachzuprüfen ist, ob eine neue Justierung und/oder Kalibrierung noch notwendig ist oder nicht. Daher ist diese Maßnahme besonders vorteilhaft in Zusammenhang mit einer anderen denkbaren Maßnahme, nämlich dem Abgleich mit einem Kalibrierungseintrag in dem Ereignisspeicher, kombinierbar, denn es kann überprüft werden, ob nach dem festgestellten temporären Entfernen des Sensors aus der Einbauposition bereits eine neue Kalibrierung des Sensors stattgefunden hat. Dann kann die Warninformation beispielsweise nur dann ausgegeben werden, wenn der temporär entfernte Sensor nicht nachkalibriert wurde. Nichtsdestotrotz ist es zweckmäßig, auch in solchen Fällen wenigstens einen Ausbaueintrag im Ereignisspeicher abzulegen, da es auch zu Fehlkalibrierungen und dergleichen kommen kann, die dann bestimmten Vorgängen mit dem Sensor zugeordnet werden können.

Schließlich ist es als weitere Maßnahme auch denkbar, insbesondere wiederum bevorzugt in Zusammenhang mit einem Abgleich mit dem Kalibriereintrag, den Sensor zu deaktivieren, insbesondere, bis wieder eine Kalibrierung des Sensors vorgenommen wurde. So kann vermieden werden, dass aufgrund einer falschen Justierung und/oder Kalibrierung fehlerhafte Daten an andere Fahrzeugsysteme weitergegeben werden.

Insgesamt kann also vorgesehen sein, dass die Steuereinrichtung als Maßnahmen zur Deaktivierung des Sensors und/oder zur Ausgabe einer Warninformation über eine Anzeigevorrichtung und/oder zum Speichern eines Ausbaueintrags in einem Ereignisspeicher und/oder zum Abgleich mit einem Kalibrierungseintrag in dem Ereignisspeicher ausgebildet ist. Bevorzugt kann dabei die Steuereinrichtung ausgebildet sein, wenigstens eine Maßnahme zur Ausgabe einer Warninformation und/oder zur Deaktivierung des Sensors nur dann umzusetzen, wenn kein eine Neukalibrierung des Sensors nachdem temporären Entfernen anzeigender Kalibrierungseintrag in dem Ereignisspeicher vorliegt.

Der Sensor ist dabei insbesondere ein Umfeldsensor, beispielsweise eine Kamera oder ein Radarsensor, und/oder die Einbauposition liegt insbesondere an einer Scheibe des Kraftfahrzeugs und/oder an einer Karosserie des Kraftfahrzeugs. Besonders bezieht sich die vorliegende Erfindung dabei auf Kameras, die mittels einer Halteeinrichtung an einer Frontscheibe des Kraftfahrzeugs vorgesehen sind, wobei die Gesamtheit aus Halteeinrichtung und Kamera auch als Kamerasystem bezeichnet werden kann. Denn gerade beim häufigen Auftreten eines Scheibenwechsels in Kraftfahrzeugen ist die Erfindung äußerst vorteilhaft anwendbar.

Wie bereits erwähnt wurde, kann der Sensor über eine Halteeinrichtung in der Einbauposition fixiert sein. Die Halteeinrichtung kann dabei eine Aufnahme umfassen, in die der Sensor eingesetzt wird. So sind beispielsweise Halteeinrichtungen bekannt, die auf eine Frontscheibe des Kraftfahrzeugs aufgeklebt werden können und in die der Sensor in eine entsprechende Aufnahme, beispielsweise einrastend, eingesetzt werden kann. Bevorzugt ist an einer derartigen Halteeinrichtung auch eine Verriegelungseinrichtung vorgesehen, die den Sensor in der Aufnahme fixiert.

Zur konkreten Umsetzung der Detektionseinrichtung sind im Rahmen der vorliegenden Erfindung eine Vielzahl von zweckmäßigen Möglichkeiten denkbar.

So sieht eine Ausgestaltung der vorliegenden Erfindung, in der der Sensor über eine Halteeinrichtung in der Einbauposition fixiert ist, vor, dass die Halteeinrichtung eine durch eine sensorseitige Ausleseeinrichtung auslesbare, insbesondere mechanische Kodierungseinrichtung aufweist, wobei die Steuereinrichtung zur Feststellung einer temporären Entfernung des Sensors aus der Einbauposition bei einer veränderten Kodierung der Halteeinrichtung ausgebildet ist. Es ist also denkbar, die Halteeinrichtung mit einer Identifikationsinformation zu versehen, die durch eine sensorseitige Ausleseeinrichtung als Teil der Detektionseinrichtung auslesbar ist, so dass eine veränderte Identifikationsinformation, also Kodierung, der Halteeinrichtung eindeutig auf einen aufgetretenen Aus- und Wiedereinbau des Sensors schließen lässt. Während es grundsätzlich denkbar ist, die Kodierungseinrichtung elektrisch oder elektronisch vorzusehen, beispielsweise als ein RFID-Chip, wird es erfindungsgemäß bevorzugt, die Kodierungseinrichtung mechanisch auszugestalten. So ist es beispielsweise denkbar, die Halteeinrichtungen mit bestimmten Bereichen zu versehen, in denen Markierungsmuster ausgestanzt werden können oder gar ein nachträglich veränderbares Muster vorgesehen ist, welches sensorseitig über die Ausleseeinrichtung erfassbar ist. In jedem Fall wird dann, wenn jeder Halteeinrichtung eine individuelle Kodierung zugeordnet ist, ein Austausch der Halteeinrichtung bemerkt, die zwangsläufig mit einem temporären Entfernen des Sensors aus der Einbauposition einhergeht. Derartiges ist bei an Frontscheiben angeordneten Kameras häufig zweckmäßig, nachdem mit einer Frontscheibe häufig auch die Halteeinrichtung ausgetauscht wird. Allerdings sind auch Varianten der Erfindung denkbar, in denen an der Kodierungseinrichtung durch den Entnahmevorgang des Sensors aus der Halteeinrichtung bereits eine Veränderung der Kodierung auftritt, beispielsweise durch herausbrechende Teile bei einer mechanischen Kodierungseinrichtung, wenn ein einmal eingebauter Sensor wieder entnommen wird. Auch dann liegt mithin eine Veränderung der Kodierung vor.

Eine weitere Ausgestaltung der vorliegenden Erfindung sieht vor, dass die Detektionseinrichtung eine mechanische Schalteinrichtung mit wenigstens zwei Schaltstellungen, welche derart verbaut ist, dass eine temporäre Entfernung des Sensors die Schalteinrichtung betätigt und die Schaltstellung ändert, und eine Ausleseeinrichtung zum Auslesen der Schaltstellung umfasst. Die dieser Ausgestaltung zugrundeliegende Idee ist die Verwendung eines mechanischen Schalters, der durch den Aus- und Einbauvorgang betätigt wird. Mechanische Schalteinrichtungen weisen den Vorteil auf, ohne Betriebsenergie zu funktionieren und einfach und kostengünstig realisierbar zu sein. Ein Auslesen durch die Ausleseeinrichtung kann mithin zeitlich versetzt erfolgen, beispielsweise dann, wenn der Sensor wieder bestromt ist. Dann wird die veränderte Schaltstellung festgestellt und es kann entsprechend auf das temporäre Entfernen des Sensors geschlossen werden.

Die Schalteinrichtung kann ein Druckschalter sein und/oder mehr als zwei Schaltstellungen aufweisen. Druckschalter weisen meist ein Betätigungselement auf, welches gegen eine elastische Kraft in eine zweite Stellung verbraucht werden kann, um den Schaltvorgang zu realisieren. Der Schaltvorgang wird dabei zweckmäßigerweise abgeschlossen, wenn das Betätigungselement durch die elastische Kraft aus der zweiten Stellung wieder in die erste Stellung bewegt wird. Mithin sieht eine äußerst zweckmäßige Ausgestaltung vor, dass der seitens des Sensors und/oder einer Anlagefläche des Sensors im Einbauzustand angeordnete Druckschalter im Einbauzustand des Sensors gegen eine elastische Kraft in einer zweiten, eingedrückten Stellung gehalten ist. Mithin wird bei Verlassen des Einbauzustands der Druckschalter, konkret das Bestätigungselement, durch die elastische Kraft in die erste Stellung bewegt, wobei insbesondere der Schaltvorgang stattfindet und sich die Schaltstellung ändert.

Zudem ist es, wie bereits dargelegt wurde, zweckmäßig, wenn mehr als zwei Schaltstellungen vorhanden sind, so dass beispielsweise ein zweimaliges Ein- und Ausbauen während eines Wartungsvorgangs nicht unmittelbar wieder in die erste Schaltstellung, die ursprünglich vorlag, zurückführt, so dass die Änderung nicht mehr festgestellt werden könnte. In der Praxis können hierzu drei Schaltstellungen bereits ausreichend sein, es ist jedoch auch denkbar, mehr als drei Schaltstellungen zu verwenden, beispielsweise nach Art eines mechanischen Inkrementalgebers.

Eine andere Ausgestaltung der vorliegenden Erfindung sieht vor, dass die Schalteinrichtung durch Öffnen einer Verriegelungseinrichtung für eine Aufnahme des Sensors betätigbar ist. Eine derartige Aufnahme kann beispielsweise in einer Halteeinrichtung ausgebildet sein, denkbar ist es jedoch auch, diese direkt am Kraftfahrzeugteil, beispielsweise der Karosserie, auszubilden. Nachdem häufig eine Art Einrastfunktion in die Aufnahme gegeben ist, dabei aber ein versehentliches Ausrasten vermieden werden soll, können Verriegelungseinrichtungen vorgesehen werden, die beispielsweise eine bewegliche Rastnase oder dergleichen fixieren. Soll der Sensor aus der Aufnahme entnommen werden, ist mithin zunächst die Verriegelungseinrichtung zu lösen, was zur Betätigung des mechanischen Schalters führen kann.

Die Ausleseeinrichtung kann im Übrigen beliebig einfach realisiert sein und die Schaltstellungen der Schalteinrichtung unmittelbar nutzen, beispielsweise, wenn diese Leitungswege definieren, die bestimmte Stromkreise oder dergleichen schließen oder je nach Schaltstellung unterschiedliche Widerstände zur Verfügung stellen. Dann kann beispielsweise ein der Detektionseinrichtung zugeordnetes Steuergerät der Steuereinrichtung, welches auch in dem Sensor selbst verbaut sein kann, durch eine einfache Abfrage die veränderte Schaltstellung feststellen.

In einer zur mechanischen Ausgestaltung einer Schalteinrichtung alternativen, weiteren Ausführungsform der Erfindung kann vorgesehen sein, dass die Detektionseinrichtung eine durch die Steuereinrichtung auslesbare Speichereinrichtung und eine Änderungseinrichtung zur Änderung eines Speichereintrags bei Entnahme des Sensors aus der Einbauposition aufweist. Auf diese Weise ist mithin eine elektronische Lösung, beispielsweise in Form eines kleinen Schaltkreises gegeben, die ein Speichermuster in einer Speichereinrichtung verändert, beispielsweise wenigstens ein vorbestimmtes Bit setzt oder dergleichen. Die Steuereinrichtung hat Zugriff auf die Speichereinrichtung und kann diese mithin entsprechend auslesen. Die Speichereinrichtung kann dabei beispielsweise als ein EEPROM oder ein vergleichbarer nicht flüchtiger Speicher realisiert werden, nachdem auch derartige Speichereinrichtungen bei Bedarf zurückgesetzt werden können, beispielsweise durch "Flashen". Vorteil dieser Ausgestaltung ist, dass nur ein Änderungsvorgang erforderlich ist, der durch das Entfernen des Sensors aus der Einbauposition getriggert wird.

Mithin sieht eine zweckmäßige Weiterbildung vor, dass die Änderungseinrichtung eine Energieversorgungseinrichtung umfasst, die bei der Entnahme des Sensors aus der Einbauposition die für die Änderung benötigte Energie bereitstellt. Derartiges ist notwendig, nachdem das Kraftfahrzeug üblicherweise bei Entnahmevorgängen von Sensoren stromlos geschaltet ist und daher selbst die Energie nicht zwangsläufig zur Verfügung stellen kann, insbesondere dann nicht, wenn die Detektionseinrichtung vollständig im Sensor verbaut ist, der ja gerade entnommen wird.

Zur konkreten Ausgestaltung der Energieversorgungseinrichtung sind verschiedene Möglichkeiten denkbar. So kann vorgesehen sein, dass die Energieversorgungseinrichtung eine Batterie und einen bei Entnahme des Sensors aus der Einbauposition insbesondere mechanisch schließenden Schalter umfasst. Dabei kann es sich wiederum um einen Druckschalter mit einem Betätigungselement handeln, dass durch eine elastische Kraft in eine erste Stellung gedrückt wird, in der der Stromkreis geschlossen ist und die Änderungseinrichtung mithin mit Energie versorgt wird. Ist der Sensor eingebaut, befindet sich das Betätigungselement in einer zweiten Stellung, in der eine Leitung mithin getrennt ist. Diese zweite Stellung wird jedoch automatisch verlassen, sobald der Ausbau erfolgt. Bevorzugt ist es im Rahmen der vorliegenden Erfindung jedoch, wenn die Energie zum Betrieb der Änderungseinrichtung durch den Ausbauvorgang selbst erzeugt wird. Hierzu kann beispielsweise vorgesehen sein, dass die Energieversorgungseinrichtung ein Piezoelement zur Erzeugung elektrischer Energie durch den Entnahmevorgang aufweist. Andere Ausgestaltungen dieser Art, beispielsweise eine induktive Erzeugung von Energie, sind selbstverständlich ebenso möglich. Dann ist eine zusätzliche Energiequelle wie eine Batterie erforderlich.

In einer besonders bevorzugten Ausgestaltung dieser Erfindungsvariante ist vorgesehen, dass die Steuereinrichtung zum Zurücksetzen der Änderung in der Speichereinrichtung nach einer Neujustierung und/oder Neukalibrierung des Sensors ausgebildet ist. Das bedeutet, die Speichereinrichtung wird dann, wenn der ausgebaute und wieder eingebaute Sensor korrekt justiert und/oder kalibriert ist, wieder in ihren Ursprungszustand zurückversetzt, so dass auch das nächste temporäre Entfernen des Sensors wiederum durch die Detektionseinrichtung erfasst werden kann. Nichtsdestotrotz sei angemerkt, dass es auch in diesem Zusammenhang zweckmäßig ist, wenn die Steuereinrichtung als Maßnahme bei einer temporären Entfernung des Sensors einen Ausbaueintrag in einem insbesondere generell für das Kraftfahrzeug vorgesehene Ereignisspeicher erzeugt.

Eine dritte zur Verwendung einer mechanischen Schalteinrichtung und zur Verwendung einer Änderungseinrichtung alternative Erfindungsvariante sieht schließlich vor, dass die Detektionseinrichtung ein dauerhaft und/oder zyklisch bestromtes Detektorelement zur Detektion des Befindens des Sensors in der Einbauposition und/oder eines-eingesteckten Zustands eines Anschlusssteckers des Sensors aufweist. In dieser Ausgestaltung wird also eine Detektionseinrichtung verwendet, die auch während der Montagetätigkeiten, zumindest zyklisch, Energie benötigt, um zu überprüfen, ob sich der Sensor temporär nicht in der Einbauposition befindet beziehungsweise ein Anschlussstecker nicht länger in einen zugehörigen Steckplatz eingesteckt ist. Letztere Maßnahme ist zumindest dann zweckmäßig, wenn zur Entnahme des Sensors aus der Einbauposition zwangsläufig der Anschlussstecker gezogen werden muss. Dabei wird eine zyklische Bestromung bevorzugt, welche beispielsweise alle 3 bis 10 Sekunden, insbesondere 5 Sekunden, für einen äußerst kurzen Zeitraum vorgenommen werden kann, da derartige Zeitabstände bereits ausreichend sind, festzustellen, ob ein das temporäre Entfernen des Sensors bedingender Wartungsvorgang stattfindet.

In einer konkreten Realisierung kann das Detektorelement eine elektrisch leitende Verbindung umfassen, die bei Entfernung des Sensors aus der Einbauposition und/oder des Steckers aus einem Steckplatz unterbrochen wird. Beispielsweise kann an einer Anlagefläche des Sensors in der Einbauposition eine leitende Fläche vorgesehen sein, die eine leitende Verbindung zwischen zwei entsprechenden Leitungsenden am Sensor herstellt, solange dieser sich in der Einbauposition befindet. Bei Verwendung eines Steckers können Leitungsabschnitte zu zwei Pins verwendet werden, die über den Steckplatz kurzgeschlossen sind, so dass innerhalb des Sensors nachvollzogen werden kann, ob der Sensor steckt oder nicht. Selbstverständlich ist auch der umgekehrte Fall möglich, bei dem der Kurzschluss der Pins über den Stecker erfolgt und die Detektionseinrichtung außerhalb des Sensors vorgesehen ist. Ersichtlich sind diesbezüglich eine Vielzahl von Ausgestaltungen denkbar.

Es sei in diesem Zusammenhang noch darauf hingewiesen, dass selbstverständlich auch andere Möglichkeiten existieren, einen Ausbauvorgang (Entnahmevorgang) aktiv durch eine Detektionseinrichtung zu vermessen, beispielsweise durch induktive und/oder kapazitive Kopplung und dergleichen.

Besonders bevorzugt wird es im Rahmen der vorliegenden Erfindung, wenn die Detektoreinrichtung in den Sensor integriert ist. Dann liegt innerhalb des betroffenen Sensors selbst jeweils die Information vor, ob dieser temporär aus seiner Einbauposition entfernt wurde und kann durch die Steuereinrichtung beziehungsweise einen entsprechenden, außerhalb des Sensors angeordneten Teil der Steuereinrichtung abgefragt werden.

Neben dem Kraftfahrzeug betrifft die Erfindung mithin auch einen Sensor zur Montage in einer festen Einbauposition innerhalb eines Kraftfahrzeugs, welcher sich dadurch auszeichnet, dass er eine Detektionseinrichtung zum Erfassen einer temporären Entfernung des Sensors aus der Einbauposition aufweist. Dabei sind auch Ausgestaltungen denkbar, in denen die bezüglich des Kraftfahrzeugs diskutierte Steuereinrichtung wenigstens teilweise innerhalb des Sensors vorgesehen ist. Auf diese Weise wird der Sensor selbst bereits geeignet ausgestaltet, um im erfindungsgemäßen Kraftfahrzeug eingesetzt zu werden. Die Ausführungen bezüglich des erfindungsgemäßen Kraftfahrzeugs, so sie sich sinnvoll bei dem Sensor anwenden lassen, lassen sich selbstverständlich analog auf diesen übertragen.

Schließlich betrifft die Erfindung noch ein Verfahren zur Überwachung wenigstens eines zu justierenden und/oder zu kalibrierenden Sensors, der in einer festen Einbauposition innerhalb eines Kraftfahrzeugs montiert ist, welches sich dadurch auszeichnet, dass eine temporäre Entfernung des Sensors aus der Einbauposition erfasst und bei einer erfassten temporären Entfernung des Sensors aus der Einbauposition wenigstens eine Maßnahme, insbesondere die Ausgabe einer Warninformation und/oder eine Deaktivierung des Sensors und/oder ein Speichern eines Ausbaueintrags in einem Ereignisspeicher und/oder ein Abgleich mit einem Kalibrierungseintrag in dem Ereignisspeicher, eingeleitet wird. Sämtliche Ausführungen bezüglich des erfindungsgemäßen Kraftfahrzeugs lassen sich analog auf das erfindungsgemäße Verfahren, übertragen, mit welchem mithin auch die genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: eine Detailzeichnung eines ersten Ausführungsbeispiels der vorliegenden Erfindung,
- Fig. 3: eine Detailzeichnung eines zweiten Ausführungsbeispiels der vorliegenden Erfindung,
- Fig. 4: eine Detailzeichnung eines dritten Ausführungsbeispiels der vorliegenden Erfindung, und
- Fig. 5: eine Detailansicht eines vierten Ausführungsbeispiels der vorliegenden Erfindung.

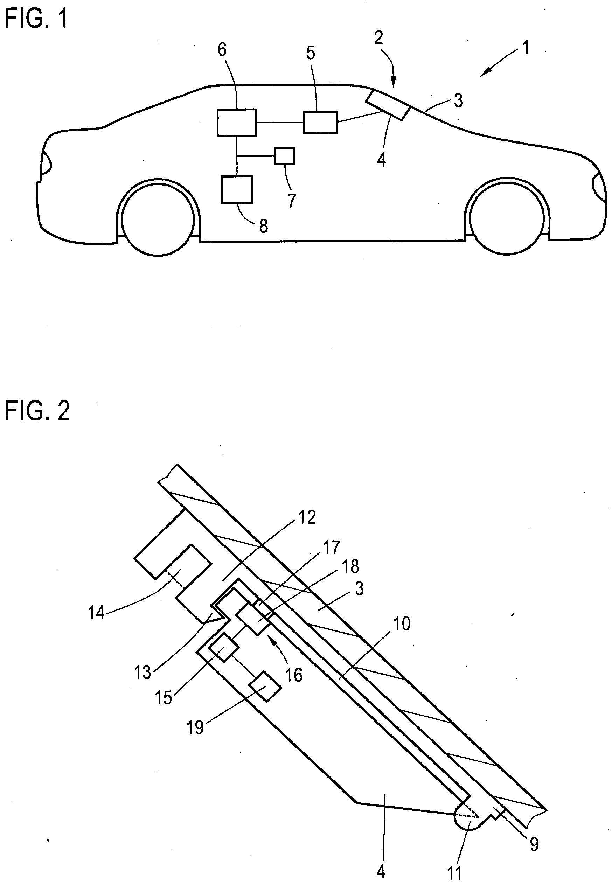

Fig. 1 zeigt eine funktionale Prinzipskizze eines erfindungsgemäßen Kraftfahrzeugs 1. Dieses umfasst als Sensor 2 vorliegend eine in einer Einbauposition an der Windschutzscheibe/Frontscheibe 3 des Kraftfahrzeugs 1 befestigte Kamera 4, welche entsprechend vor Benutzung kalibriert werden muss, um die darauf sichtbaren Bilddaten Positionen im Umfeld des Kraftfahrzeugs korrekt zuordnen zu können. Der Kamera 4 ist eine Detektionseinrichtung 5 zugeordnet, die ein temporäres Entfernen der Kamera 4 aus der Einbauposition erfassen kann, so dass eine Steuereinrichtung 6, die, wie noch näher erläutert werden wird, ein oder mehrere Steuergeräte umfassen kann, bei einer erfassten temporären Entfernung der Kamera 4 durch das Einleiten diverser Maßnahmen reagieren kann.

Hierfür hat die Steuereinrichtung 6 Zugriff auf einen für das Kraftfahrzeug allgemein genutzten Ereignisspeicher 7, der über das Bussystem des Kraftfahrzeugs 1 ausgelesen werden kann, sowie eine Anzeigevorrichtung 8, beispielsweise ein Display eines Mensch-Maschine-Interface. Auch kann der Betrieb der Kamera 4 über die Steuereinrichtung 6 gesteuert werden.

Stellt die Steuereinrichtung 6 im hier dargestellten Fall fest, dass bei einer Inbetriebnahme des Kraftfahrzeugs und der Kamera 4 ein temporäres Entfernen der Kamera 4 erfasst wurde, überprüft sie zunächst, ob in dem Ereignisspeicher und/oder einem Speicher der Kamera 4 ein Kalibrierungseintrag für die Kamera 4 vorliegt, der neueren Datums als das temporäre Entfernungsereignis ist. Ist dies der Fall, werden keine Warnungen ausgegeben und die Kamera 4 wird nicht deaktiviert; dennoch wird, falls nicht bereits geschehen, dem Ereignisspeicher 7 ein Ausbaueintrag hinzugefügt, durch dessen Abruf auch zu einem späteren Zeitpunkt noch festgestellt werden kann, dass eine temporäre Entfernung der Kamera 4 aus der Einbauposition stattgefunden hat.

Stellt die Steuereinrichtung 6 jedoch fest, dass scheinbar noch keine Neukalibrierung der Kamera 4 stattgefunden hat, wird eine Warninformation über die Anzeigevorrichtung 8 ausgegeben, die hierauf hinweist. Ferner wird die Kamera 4 zunächst deaktiviert, da ihre Sensordaten ohne Kalibrierung nicht als verlässlich angesehen werden.

Es sei noch angemerkt, dass trotz der Zeichnung als getrennte Objekte in Fig. 1 die Detektionseinrichtung 5 zumindest teilweise in die Kamera 4 integriert sein kann, was erfindungsgemäß sogar bevorzugt ist. Zudem kann das Kraftfahrzeug 1 selbstverständlich auch weitere Sensoren 2 umfassen, die beispielsweise an der Karosserie des Kraftfahrzeugs 1 befestigt sein können und denen eine entsprechende Kombination von Detektionseinrichtung 5 und Steuereinrichtung 6 zugeordnet sein kann.

Verschiedene konkrete Ausgestaltungen der Detektionseinrichtung 5 zeigen die Fig. 2 - 5. Der Einfachheit halber sind dort die konkreten Sensorkomponenten der Kamera 4 nicht näher dargestellt, sondern lediglich die für die vorliegende Erfindung relevanten Bestandteile.

Fig. 2 zeigt nun die Frontscheibe 3, an der klebend eine Halteeinrichtung 9 befestigt ist, die eine Aufnahme 10 für die Kamera 4 enthält. Dazu wird vorliegend die Kamera 4 mit einer Spitze in eine in einem Vorsprung 11 ausgebildete Befestigungsöffnung eingeführt und sodann in die Aufnahme 10 eingedrückt, so dass ein Rastelement 12 zunächst nach hinten weggedrückt wird, um dann mittels einer Rastnase 13 die Kamera 4 in der Aufnahme 10 zu halten. Um eine endgültige Fixierung zu erreichen, kann eine hier nur angedeutete Verriegelungseinrichtung 14 vorgesehen werden, die ein elastisches Wegdrücken des Rastelements 12 vermeidet.

In der Kamera 4 ist nun zudem eine Speichereinrichtung 15 verbaut, der eine Änderungseinrichtung 16 zugeordnet ist, die bei Ausbau, also Entnahme, der Kamera 4 aus der Aufnahme 10, also der Einbauposition, den Inhalt der Speichereinrichtung 15 verändern kann. Dies gelingt vorliegend, indem als Energieversorgungseinrichtung ein Piezoelement 17 gegen eine elastische Kraft in einer zweiten, eingedrückten Stellung vermittels der Anlagefläche der Aufnahme 10 gehalten wird, solange die Kamera 4 in der Aufnahme 10 eingesetzt ist. Wird die Kamera 4 aus der Aufnahme 10 entnommen, bewegt sich das Piezoelement 17 aus der zweiten Stellung in die ausgefahrene erste Ruhestellung und erzeugt dabei elektrische Energie, die zum Betreiben eines Schaltkreises 18 verwendet wird, der den Inhalt der Speichereinrichtung 15 verändert.

Die Speichereinrichtung 15 kann dabei beispielsweise ein EEPROM oder dergleichen sein, wobei wenigstens ein Bit durch die Änderungseinrichtung 16 gesetzt werden kann, wenn ein Entnahmevorgang auftritt. Die Speichereinrichtung 15 kann durch ein Steuergerät 19, welches Teil der Steuereinrichtung 6 bildet, ausgelesen und beispielsweise an ein kraftfahrzeugseitiges Steuergerät weitergegeben werden. Stellt das Steuergerät 19 fest, dass eine Kalibrierung der Kamera 4 stattgefunden hat, wird die Speichereinrichtung 15 "geflasht", das bedeutet, in den Grundzustand zurückgesetzt, so dass bei einem weiteren temporären Entfernen der Kamera 4 die Änderungseinrichtung 16 wiederum den Inhalt der Speichereinrichtung 15 verändern kann.

Varianten dieses ersten Ausführungsbeispiels sehen vor, dass eine Batterie verwendet wird und statt des Piezoelements 17 ein üblicher Druckschalter verwendet wird, der schließt, wenn sich das Betätigungselement in die erste, ausgefahrene Stellung bewegt. Eine andere Alternative verwendet statt der Speichereinrichtung 15 und der Änderungseinrichtung 16 eine mechanische Schalteinrichtung mit mehreren Schaltzuständen, die ebenso entsprechend über das Steuergerät 19 ausgelesen werden können.

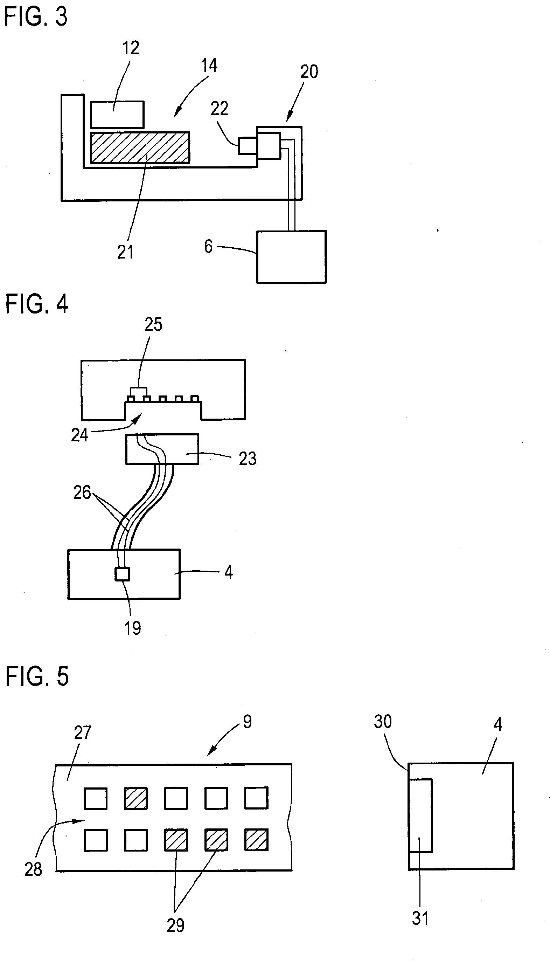

Fig. 3 zeigt ein weiteres Ausführungsbeispiel, bei dem eine mechanische Schalteinrichtung 20 an der Verriegelungseinrichtung 14 verwendet wird. Gezeigt ist ein Fall, in dem das Rastelement 12 über ein Verriegelungselement 21 fixiert werden kann, wenn sich das Verriegelungselement 21 in einer ersten Stellung hinter dem Rastelement 12 befindet. Die Kamera 4 kann dann nicht entnommen werden. Um dies zu ermöglichen, muss das Verriegelungselement 21 in eine zweite Stellung bewegt werden, in der das Betätigungselement 22 der als Druckschalter ausgebildeten Schalteinrichtung 20 aus der ausgefahrenen ersten Stellung gegen eine elastische Kraft in eine zweite, eingedrückte Stellung, bewegt wird. Wird das Verriegelungselement 21 später wieder aus der zweiten Stellung in die erste Stellung bewegt, nachdem die Kamera 4 wieder eingebaut wurde, bewegt sich das Betätigungselement 22 wieder in die erste Stellung und die Schaltstellung der Schalteinrichtung 20 hat sich verändert. Dabei weist die Schalteinrichtung 20 zur Sicherheit mehr als zwei Schaltstellungen auf. Die aktuelle Schaltstellung kann über ein Steuergerät der Steuereinrichtung 6 abgefragt werden, wobei eine Veränderung der Schaltstellung ein temporäres Entfernen der Kamera 4 aus der Einbauposition anzeigt.

Fig. 4 zeigt ein drittes Ausführungsbeispiel zur Realisierung der Detektionseinrichtung 5. Dabei wird als Anzeichen für ein temporäres Entfernen der Kamera 4 ein Ziehen ihres Anschlusssteckers 23 verwendet. Seitens des Steckplatzes 24 sind ersichtlich zwei Anschlusspins über eine Kurzschlussleitung 25 verbunden. Wird der Stecker 23 also eingesteckt, wird über entsprechende Leitungen 26 zum Steuergerät 19 der Kamera 4 dort ein Kurzschluss detektierbar sein. Wird der Stecker 23 gezogen, ist dies nicht mehr der Fall. Dies kann entsprechend festgestellt werden, indem eine regelmäßige, zyklische Überprüfung, beispielsweise alle 5 Sekunden, stattfindet, ob der Stecker 23 weiter im Steckplatz 24 eingesteckt ist.

Fig. 5 zeigt schließlich ein viertes Ausführungsbeispiel zur Realisierung einer Detektionseinrichtung. Dabei wird seitens einer Anlagefläche 27 der hier nur teilweise dargestellten Halteeinrichtung 9 als Kodiereinrichtung 28 ein Muster ausgestanzt, vorliegend durch Erzeugung mehrerer Vertiefungen oder Öffnungen 29 in einem vorgegebenen Raster. Dieses Muster ist für verschiedene Halteeinrichtungen 9 unterschiedlich, nachdem mit der Frontscheibe 3 häufig auch die Halteeinrichtung 9 ausgetauscht wird und dann zwangsläufig ein temporäres Entfernen der Kamera 4 erforderlich ist. Diese ist ebenso in Fig. 5 nur schematisch dargestellt und weist an einer der Anlagefläche 27 gegenüberliegenden Außenseite 30 eine Ausleseeinrichtung 31 zum Auslesen der Kodierungseinrichtung 28 auf. Wird eine über die Zeit veränderte Kodierung festgestellt, mithin ein unterschiedliches Muster, wird auch eine temporäre Entfernung der Kamera 4 aus der Einbauposition erfasst.

Eine weitere Variante umfasst eine fluide Sicherung. Nach der Montage der Monokamera wird hierbei eine fluide Sicherung befestigt die bei einer Demontage entweder bricht, bzw. sich dann Verfärbt. Die Montage der Sicherung kann an der Steckung des Kamerasystems oder an dem Kamerasystem selber zur Scheibe erfolgen.

## Patentansprüche

1. Kraftfahrzeug (1), umfassend wenigstens einen zu justierenden und/oder zu kalibrierenden Sensor (2), der in einer festen Einbauposition innerhalb des Kraftfahrzeugs (1) montiert ist, wobei eine Detektionseinrichtung (5) zum Erfassen einer temporären Entfernung des Sensors (2) im stromlosen Zustand aus der Einbauposition vorgesehen ist, **dadurch gekennzeichnet, dass** eine bei einer erfassten temporären Entfernung des Sensors (2) aus der Einbauposition bei Inbetriebnahme des Sensors (2) wenigstens eine Maßnahme einleitende Steuereinrichtung (6) vorgesehen ist.

2. Kraftfahrzeug nach Anspruch 1,
**dadurch gekennzeichnet,**
**dass** der Sensor (2) ein Umfeldsensor ist und/oder die Einbauposition an einer Scheibe (3) des Kraftfahrzeugs (1) oder an einer Karosserie des Kraftfahrzeugs (1) liegt.

3. Kraftfahrzeug nach Anspruch 1 oder 2,
**dadurch gekennzeichnet,**
**dass** der Sensor (2) über eine Halteeinrichtung (9) in der Einbauposition fixiert ist.

4. Kraftfahrzeug nach Anspruch 3,
**dadurch gekennzeichnet,**
**dass** die Halteeinrichtung (9) eine durch eine sensorseitige Ausleseeinrichtung (31) auslesbare Kodierungseinrichtung (28) aufweist, wobei die Steuereinrichtung (6) zur Feststellung einer temporären Entfernung des Sensors (2) aus der Einbauposition bei einer veränderten Kodierung der Halteeinrichtung (9) ausgebildet ist.

5. Kraftfahrzeug nach einem der vorangehenden Ansprüche,
**dadurch gekennzeichnet,**
**dass** die Detektionseinrichtung (5) eine mechanische Schalteinrichtung (20) mit wenigstens zwei Schaltstellungen, welche derart verbaut ist, dass eine temporäre Entfernung des Sensors (2) die Schalteinrichtung (20) betätigt und die Schaltstellung ändert, und eine Ausleseeinrichtung zum Auslesen der Schaltstellungen umfasst.

6. Kraftfahrzeug nach Anspruch 5,
**dadurch gekennzeichnet,**
**dass** die Schalteinrichtung (20) ein Druckschalter ist und/oder mehr als zwei Schaltstellungen aufweist.

7. Kraftfahrzeug nach Anspruch 6,
**dadurch gekennzeichnet,**
**dass** der seitens des Sensors (2) und/oder einer Anlagefläche des Sensors (2) im Einbauzustand angeordnete Druckschalter im Einbauzustand des Sensors (2) gegen eine elastische Kraft in einer zweiten, eingedrückten Stellung gehalten ist.

8. Kraftfahrzeug nach Anspruch 5 oder 6,
**dadurch gekennzeichnet,**
**dass** die Schalteinrichtung (20) durch Öffnen einer Verriegelungseinrichtung (14) für eine Aufnahme des Sensors (2) betätigbar ist.

9. Kraftfahrzeug nach einem der Ansprüche 1 bis 4,
**dadurch gekennzeichnet,**
**dass** die Detektionseinrichtung (5) eine durch die Steuereinrichtung (6) auslesbare Speichereinrichtung (15) und eine Änderungseinrichtung (16) zur Änderung eines Speichereintrags bei Entnahme des Sensors (2) aus der Einbauposition aufweist.

10. Kraftfahrzeug nach Anspruch 9,
**dadurch gekennzeichnet,**
**dass** die Änderungseinrichtung (16) eine Energieversorgungseinrichtung umfasst, die bei der Entnahme des Sensors (2) aus der Einbauposition die für die Änderung benötigte Energie bereitstellt.

11. Kraftfahrzeug nach Anspruch 10,
**dadurch gekennzeichnet,**
**dass** die Energieversorgungseinrichtung eine Batterie und einen bei Entnahme des Sensors (2) aus der Einbauposition schließenden Schalter umfasst und/oder ein Piezoelement (17) zur Erzeugung elektrischer Energie durch den Entnahmevorgang aufweist.

12. Kraftfahrzeug nach einem der Ansprüche 9 bis 11,
**dadurch gekennzeichnet,**
**dass** die Steuereinrichtung (6) zum Zurücksetzen der Änderung in der Speichereinrichtung (15) nach einer Neujustierung und/oder Neukalibrierung des Sensors (2) ausgebildet ist.

13. Kraftfahrzeug einem der Ansprüche 1 bis 4,
**dadurch gekennzeichnet,**
**dass** die Detektionseinrichtung (5) ein dauerhaft oder zyklisch bestromtes Detektorelement zur Detektion des Befindens des Sensors (2) in der Einbauposition und/oder eines eingesteckten Zustands eines Anschlusssteckers (23) des Sensors (2) aufweist.

14. Kraftfahrzeug nach Anspruch 13,
**dadurch gekennzeichnet,**
**dass** das Detektorelement eine elektrisch leitende Verbindung (25, 26) umfasst, die bei Entfernen des Sensors (2) aus der Einbauposition und/oder des Steckers (23) aus einem Steckplatz (24) unterbrochen wird.

15. Kraftfahrzeug nach einem der vorangehenden Ansprüche,
**dadurch gekennzeichnet,**
**dass** die Detektoreinrichtung (5) in den Sensor (2) integriert ist.

16. Kraftfahrzeug nach einem der vorangehenden Ansprüche,
**dadurch gekennzeichnet,**
**dass** die Steuereinrichtung (6) als Maßnahmen zur Deaktivierung des Sensors (2) und/oder zur Ausgabe einer Warninformation über eine Anzeigevorrichtung (8) und/oder zum Speichern eines Ausbaueintrags in einem Ereignisspeicher (7) und/oder zum Abgleich mit einem Kalibrierungseintrag in dem Ereignisspeicher (7) ausgebildet ist.

17. Sensor (2) zur Montage in einer festen Einbauposition innerhalb eines Kraftfahrzeugs (1), wobei er eine Detektionseinrichtung (5) zum Erfassen einer temporären Entfernung des Sensors (2) im stromlosen Zustand aus der Einbauposition aufweist, **dadurch gekennzeichnet, dass** bei einer erfassten temporären Entfernung des Sensors aus der Einbauposition bei Inbetriebnahmen des Sensors, wenigstens eine Maßnahme eingeleitet wird.

18. Verfahren zur Überwachung wenigstens eines zu justierenden und/oder zu kalibrierenden Sensors (2), der in einer festen Einbauposition innerhalb eines Kraftfahrzeugs (1) montiert ist, wobei eine temporäre Entfernung des Sensors (2) im stromlosen Zustand aus der Einbauposition erfasst wird, **dadurch gekennzeichnet, dass** bei einer erfassten temporären Entfernung des Sensors (2) aus der Einbauposition bei Inbetriebnahme des Sensors (2) wenigstens eine Maßnahme eingeleitet wird.

## Claims

1. Motor vehicle (1), comprising at least one sensor (2) to be adjusted and/or to be calibrated which is mounted in a fixed installation position inside the motor vehicle (1), wherein a detection device (5) is provided for detecting a temporary removal of the sensor (2) in the currentless state from the installation position, **characterised in that** a control device (6) is provided which implements at least one measure when the temporary removal of the sensor (2) from the installation position is detected during the start-up of the sensor (2).

2. Motor vehicle according to claim 1, **characterised in that** the sensor (2) is an environmental sensor and/or the installation position is located on a disc (3) of the motor vehicle (1) or on a body of the motor vehicle (1).

3. Motor vehicle according to claim 1 or 2, **characterised in that** the sensor (2) is fixed in the installation position via a holding device (9).

4. Motor vehicle according to claim 3, **characterised in that** the holding device (9) comprises a coding device (28) readable by a sensor-side reading device (31) wherein the control device (6) is configured to determine a temporary removal of the sensor (2) from the installation position when there is a change in the coding of the holding device (9).

5. Motor vehicle according to any one of the preceding claims, **characterised in that** the detection device (5) comprises a mechanical switch device (20) with at least two switch positions which is integrated such that a temporary removal of the sensor (2) actuates the switch device (20) and changes the switch position, and also comprises a reading device for reading the switch positions.

6. Motor vehicle according to claim 5, **characterised in that** the switch device (20) is a pressure switch and/or comprises more than two switch positions.

7. Motor vehicle according to claim 6, **characterised in that** the pressure switch arranged on the sensor (2) and/or a contact surface of the sensor (2) in the installed state is held in the installed state of the sensor (2) against an elastic force in a second, pressed-in position.

8. Motor vehicle according to claim 5 or 6, **characterised in that** the switch device (20) is actuatable by opening a locking device (14) for receiving the sensor (2).

9. Motor vehicle according to any one of claims 1 to 4, **characterised in that** the detection device (5) comprises a memory device (15) readable by the control device (6) and a variation device (16) for changing a memory entry when the sensor (2) is removed from the installation position.

10. Motor vehicle according to claim 9, **characterised in that** the variation device (16) comprises a power supply device which provides the energy required for the change when the sensor (2) is removed from the installation position.

11. Motor vehicle according to claim 10, **characterised in that** the power supply device comprises a battery and a switch that closes when the sensor (2) is removed from the installation position and/or it comprises a piezo element (17) for generating electric energy through the removal process.

12. Motor vehicle according to any one of claims 9 to 11, **characterised in that** the control device (6) is configured to reset the change in the memory device (15) after a readjustment and/or recalibration of the sensor (2).

13. Motor vehicle according to any one of claims 1 to 4, **characterised in that** the detection device (5) comprises a permanently or cyclically energised detector element for detecting the condition of the sensor (2) in the installation position and/or an inserted state of a connection plug (23) of the sensor (2).

14. Motor vehicle according to claim 13, **characterised in that** the detector element comprises an electrically-conductive connection (25, 26) which is interrupted when the sensor (2) is removed from the installation position and/or the plug (23) is removed from a socket (24).

15. Motor vehicle according to any one of the preceding claims, **characterised in that** the detector device (5) is integrated into the sensor (2).

16. Motor vehicle according to any one of the preceding claims, **characterised in that** as measures, the control device (6) is configured to deactivate the sensor (2) and/or to issue warning information via a display device (8) and/or to store a removal entry in an event memory (7) and/or to compare with a calibration entry in the event memory (7).

17. Sensor (2) for mounting in a fixed installation position inside a motor vehicle (1), wherein it comprises a detection device (5) for detecting a temporary removal of the sensor (2) in the currentless state from the installation position, **characterised in that** at least one measure is implemented when the temporary removal of the sensor from the installation position is detected during the start-up of the sensor.

18. Method for monitoring at least one sensor (2) to be adjusted and/or to be calibrated which is mounted in a fixed installation position inside a motor vehicle (1), wherein a temporary removal of the sensor (2) in the currentless state from the installation position is detected, **characterised in that** at least one measure is implemented when the temporary removal of the sensor (2) from the installation position is detected during the start-up of the sensor (2).

## Revendications

1. Véhicule automobile (1), comprenant au moins un capteur (2) à régler et/ou à calibrer, lequel capteur est monté dans une position de montage fixe à l'intérieur du véhicule automobile (1),
dans lequel un dispositif de détection (5) est prévu pour détecter un éloignement temporaire du capteur (2) à l'état hors tension hors de la position de montage,
**caractérisé en ce qu'**il est prévu un dispositif de commande (6) qui, lors d'un éloignement temporaire détecté du capteur (2) hors de la position de montage lors de la mise en service du capteur (2), déclenche au moins une action.

2. Véhicule automobile selon la revendication 1,
**caractérisé en ce que**
le capteur (2) est un capteur d'environnement et/ou la position de montage est située sur une vitre (3) du véhicule automobile (1) ou sur une carrosserie du véhicule automobile (1).

3. Véhicule automobile selon la revendication 1 ou 2,
**caractérisé en ce que**
le capteur (2) est fixé dans la position de montage par l'intermédiaire d'un dispositif de fixation (9).

4. Véhicule automobile selon la revendication 3,
**caractérisé en ce que**
le dispositif de fixation (9) comporte un dispositif de codage (28) pouvant être lu par un dispositif de lecture (31) situé du côté du capteur, le dispositif de commande (6) étant conçu pour constater un éloignement temporaire du capteur (2) hors de la position de montage en présence d'un codage modifié du dispositif de fixation (9).

5. Véhicule automobile selon l'une des revendications précédentes,
**caractérisé en ce que**
le dispositif de détection (5) comprend un commutateur mécanique (20) avec au moins deux positions de commutation, qui est construit de telle sorte qu'un éloignement temporaire du capteur (2) actionne le commutateur (20) et modifie la position de commutation, et un dispositif de lecture pour lire les positions de commutation.

6. Véhicule automobile selon la revendication 5,
**caractérisé en ce que**
le commutateur (20) est un interrupteur à pression et/ou comporte plus de deux positions de commutation.

7. Véhicule automobile selon la revendication 6,
**caractérisé en ce que**
l'interrupteur à pression agencé du côté du capteur (2) et/ou d'une surface d'appui du capteur (2) à l'état monté est maintenu dans une deuxième position enfoncée, contre une force élastique, lorsque le capteur (2) est dans l'état monté.

8. Véhicule automobile selon la revendication 5 ou 6,
**caractérisé en ce que**
le commutateur (20) peut être actionné par l'ouverture d'un dispositif de verrouillage (14) afin de loger le capteur (2).

9. Véhicule automobile selon l'une des revendications 1 à 4,
**caractérisé en ce que**
le dispositif de détection (5) comporte un dispositif de mémorisation (15) qui peut être lu par le dispositif de commande (6) et un dispositif de modification (16) qui est destiné à modifier une entrée en mémoire lors de l'enlèvement du capteur (2) hors de la position de montage.

10. Véhicule automobile selon la revendication 9,
**caractérisé en ce que**
le dispositif de modification (16) comprend un dispositif d'alimentation en énergie qui, lors de l'enlèvement du capteur (2) hors de la position de montage, fournit l'énergie nécessaire à la modification.

11. Véhicule automobile selon la revendication 10,
**caractérisé en ce que**
le dispositif d'alimentation en énergie comprend une batterie et un commutateur qui ferme lors de l'enlèvement du capteur (2) hors de la position de montage et/ou comporte un élément piézoélectrique (17) destiné à produire de l'énergie électrique via l'opération d'enlèvement.

12. Véhicule automobile selon l'une des revendications 9 à 11,
**caractérisé en ce que**
le dispositif de commande (6) est conçu pour remettre à l'état initial la modification dans le dispositif de mémorisation (15) après un nouveau réglage et/ou un nouveau calibrage du capteur (2).

13. Véhicule automobile selon l'une des revendications 1 à 4,
**caractérisé en ce que**
le dispositif de détection (5) comporte un élément détecteur alimenté en courant de manière permanente ou cyclique et destiné à la détection de la présence du capteur (2) dans la position de montage et/ou d'un état enfiché d'un connecteur de raccordement (23) du capteur (2).

14. Véhicule automobile selon la revendication 13,
**caractérisé en ce que**
l'élément détecteur comprend une liaison électriquement conductrice (25, 26) qui est interrompue lors de l'enlèvement du capteur (2) hors de la position de montage et/ou lors de l'enlèvement du connecteur (23) hors d'un emplacement d'enfichage (24).

15. Véhicule automobile selon l'une des revendications précédentes,
**caractérisé en ce que**
le dispositif de détection (5) est intégré dans le capteur (2).

16. Véhicule automobile selon l'une des revendications précédentes,
**caractérisé en ce que**
le dispositif de commande (6) est conçu pour déclencher comme actions la désactivation du capteur (2) et/ou la délivrance d'une information d'avertissement via un dispositif d'affichage (8) et/ou la mémorisation d'un enregistrement de démontage dans une mémoire d'événements (7) et/ou l'équilibrage avec un enregistrement de calibrage dans la mémoire d'événements (7).

17. Capteur (2) destiné à être monté dans une position de montage fixe à l'intérieur d'un véhicule automobile (1),
lequel comporte un dispositif de détection (5) destiné à détecter un éloignement temporaire du capteur (2) à l'état hors tension hors de la position de montage,
**caractérisé en ce que**, lors d'un éloignement temporaire détecté du capteur hors de la position de montage lors de la mise en service du capteur, au moins une action est déclenchée.

18. Procédé de surveillance d'au moins un capteur (2) à régler et/ou à calibrer qui est monté dans une position de montage fixe à l'intérieur d'un véhicule automobile (1),
dans lequel un éloignement temporaire du capteur (2) à l'état hors tension hors de la position de montage est détecté,
**caractérisé en ce que**, lors d'un éloignement temporaire détecté du capteur (2) hors de la position de montage lors de la mise en service du capteur (2), au moins une action est déclenchée.
